(19) Europäisches Patentamt
European Patent Office
Office européen des brevets

(11) Numéro de publication : **0 324 681 B1**

(12) # FASCICULE DE BREVET EUROPEEN

(45) Date de publication du fascicule du brevet : **07.08.91 Bulletin 91/32**

(51) Int. Cl.[5] : **C10L 5/14, C10L 5/10**

(21) Numéro de dépôt : **89400071.0**

(22) Date de dépôt : **10.01.89**

(54) **Aggloméré combustible résistant à l'eau, procédé pour le préparer et composition de matières mise en oeuvre dans ce procédé.**

(30) Priorité : **11.01.88 FR 8800219**

(43) Date de publication de la demande : **19.07.89 Bulletin 89/29**

(45) Mention de la délivrance du brevet : **07.08.91 Bulletin 91/32**

(84) Etats contractants désignés : **FR**

(56) Documents cités :
**FR-A- 606 197**
**FR-A- 1 271 290**
**FR-A- 2 118 741**
**FR-A- 2 241 513**
**W. NOLL: "Chemie und Technologie der Silicone", neubearbeitete und wezentlich erweiterte Auflage, 1968, pages 523-526**

(73) Titulaire : **Roquette Frères**
**F-62136 Lestrem (FR)**

(72) Inventeur : **Breuil, Dominique**
**19, rue de la Place**
**62136 Vieille Chapelle (FR)**
Inventeur : **Graux, Jean-Pierre**
**66, Hameau de Cantraine**
**62190 Lillers (FR)**
Inventeur : **Gosset, Serge**
**393, Chemin du Paradis**
**62136 Lestrem (FR)**

(74) Mandataire : **Koch, Gustave et al**
**Cabinet PLASSERAUD 84, rue d'Amsterdam**
**F-75009 Paris (FR)**

**EP 0 324 681 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

L'invention a pour objet un aggloméré combustible résistant à l'eau.

Elle vise également un procédé pour le préparer et une composition de matières mise en oeuvre dans ce procédé.

Par l'expression "agglomérés combustibles", on désigne toute présentation physique de matériaux combustibles finement divisés facilement manutentionnables et utilisables à des fins domestiques ou industrielles. On peut citer à titre d'exemple les boulets, les briquettes et les pellets.

Les matériaux combustibles finement divisés concernés par la présente invention peuvent être toutes substances riches en carbone comme par exemple des fines ou poussières de charbon, des fines de charbon de bois, des fines de coke de charbon, des fines de coke de pétrole ou un mélange de ces produits. Ces matériaux et en particulier les fines et poussières de charbon sont produits en grande quantité par les procédés modernes d'extraction et de lavage, notamment du charbon.

Parmi les utilisations valorisantes de ces matériaux, on peut citer tout particulièrement leur emploi sous forme d'agglomérés combustibles.

Différentes techniques d'agglomération de ces fines ou poussières, mettant généralement en oeuvre des additifs ou liants propres à assurer une cohésion suffisante, ont déjà été proposées.

Parmi ces additifs ou liants, les plus couramment employés sont le brai de houille, de bois ou de pétrole, le bitume, les lignosulfonates, les argiles, les polysaccharides dont en particulier les amidons et les dérivés d'amidons.

Le plus utilisé de ces liants est incontestablement le brai de houille, mais les exigences en ce qui concerne la protection de l'environnement se faisant de plus en plus strictes, son emploi connaît aujourd'hui une certaine récession.

En effet, son utilisation oblige à faire subir aux agglomérés ainsi obtenus un traitement thermique ou défumage afin d'en abaisser la concentration en composés phénoliques. Or, ce traitement entraîne une pollution atmosphérique non négligeable. De plus, le défumage n'étant pas complet, la combustion de ces agglomérés au moment de leur utilisation provoque un dégagement de fumées nocives pour l'homme.

Ces inconvénients ont conduit certains pays à en interdire l'utilisation.

Les inconvénients inhérents à l'utilisation du brai se retrouvent lors de l'emploi du bitume à titre de liant.

Pour remédier à ces inconvénients, il a été proposé d'avoir recours, en tant que liant, à des lignosulfonates, en particulier d'ammonium.

La littérature scientifique concernant l'emploi de ces produits est extrêmement abondante et l'on peut citer à titre d'exemple les brevets SU 983.147, SU 1.010.146 et SU 1.137.103, les brevets EP 0.097.486 et DE 3.227.395 ou encore les brevets DD 224.331 et US 4.666.522.

Il se trouve que la technique d'agglomération aux lignosulfonates est complexe et sa conduite nécessite une grande maîtrise.

Il est en effet nécessaire,

- d'une part, de sécher les fines à une teneur en humidité précise de sorte que le mélange lignosulfonates-fines puisse être aggloméré, un excès ou un défaut d'eau rendant impossible cette opération,
- d'autre part, de polymériser les lignosulfonates selon un profil de températures parfaitement défini afin de les insolubiliser et ainsi conférer aux agglomérés une bonne tenue à l'eau.

Or, la durée de ce dernier traitement thermique peut aller jusqu'à 3 heures et les températures requises pour l'insolubilisation doivent être élevées et notamment comprises entre 270° et 450°C suivant la nature des lignosulfonates employés.

Par conséquent, cette technique est onéreuse du point de vue énergétique. De plus, elle est aussi une cause non négligeable de pollution atmosphérique.

En effet, lors du traitement thermique, il se produit un dégagement de fumées nocives riches en acide sulfurique.

Il a été proposé de résoudre ce problème de pollution en apportant différents aménagements aux installations en question, et notamment en prévoyant des dispositifs de condensation des fumées. Mais de tels dispositifs n'ont eu pour conséquence que de déplacer le problème de pollution vers un problème de corrosion dont on sait qu'il est extrêmement difficile à maîtriser, surtout lorsqu'il s'agit de traiter des condensats riches en acide sulfurique, même en employant en tant que matériau constitutif des installations d'agglomération, des aciers spéciaux.

En tout état de cause et quelles que soient les solutions envisagées, les inconvénients liés à l'utilisation de lignosulfonates en font une technique onéreuse, comme déjà souligné ci-dessus.

De plus, les agglomérés fabriqués selon cette technique présentent l'inconvénient de générer, lors de leur combustion, des résidus soufrés qui se retrouvent notamment dans les fumées.

On a proposé des procédés ne présentant pas les inconvénients susmentionnés propres au brai, au goudron et aux lignosulfonates, dans lesquels ces liants sont remplacés par des argiles et notamment par de la bentonite (US 4.025.596 et DE 1.671.365). Toutefois, les agglomérés obtenus suivant ces techniques ne présentent pas toutes les caractéristiques physiques requises ; en particulier, leur résistance mécanique est insuffisante et leur tenue à l'eau médiocre. Il s'ensuit que ces procédés ne se sont pas développés dans la pratique.

On a également proposé d'avoir recours, en tant que liant, à de l'amidon qui, employé seul ou en mélange avec d'autres liants, comme l'enseignent par exemple les brevets US 3.726.652 et DE 3.227.395 ou encore le brevet EP 0.097.486, présente de nombreux avantages.

Une étude comparative sur la pelletisation faite en 1982 à l'Université de Berkeley (thèse de K.V.S. SASTRY et D.W. FUERSTENAU), a montré que, par rapport à une émulsion d'asphalte, ou à la bentonite, l'amidon conduisait à de meilleurs résultats sur les plans :

— de la résistance à la compression mécanique,
— de la résistance à l'abrasion,
— de la résistance aux impacts.

Par ailleurs et contrairement aux lignosulfonates, l'amidon ne nécessite pas de précaution particulière en ce qui concerne l'humidité du prémélange fines-liant avant l'étape proprement dite d'agglomération.

En outre, l'amidon peut être utilisé sans limitation dans des installations industrielles initialement conçues pour un usage de brai ou de bitume qui sont les liants les plus utilisés actuellement, son emploi ne nécessitant donc pas d'investissement supplémentaire ; de plus, la maintenance des installations est réduite.

Enfin, la combustion des agglomérés liés par de l'amidon ne génère pas de fumée toxique et/ou polluante.

Toutefois, et cela constitue un inconvénient majeur, les agglomérés à base d'amidon tout comme ceux à base de bentonite présentent une sensibilité très marquée à l'eau, rendant impossible leur stockage à l'air libre.

On a proposé, pour remédier à cet inconvénient, d'associer l'amidon avec du brai, de l'asphalte ou du bitume ou encore d'insolubiliser l'amidon avec des résines du type urée, phénol-formol, mélamine-formol, cétone-formol, ou leur mélange.

Aucune de ces solutions n'est pleinement satisfaisante car toutes reposent le problème du dégagement de fumées toxiques et polluantes lors de la combustion des agglomérés ainsi obtenus.

Il a été aussi proposé d'enrober les agglomérés d'un feuil ou d'une pellicule hydrofuge obtenu par application d'une cire émulsionnée. Bien qu'originale, une telle solution est onéreuse de par les quantités de cire mise en oeuvre et la protection contre l'humidité ainsi conférée aux agglomérés peut être altérée si ces agglomérés subissent, au cours de leur transport, des chocs entraînant une détérioration du feuil protecteur.

Il a également été proposé (voir brevet FR 2.118.741) de traiter des agglomérés combustibles par de la mélasse de betteraves ou encore des lessives sulfitiques et par un sel alcalin de l'acide méthylsilicique ; mais il se trouve que les agglomérés ainsi traités ne sont pas satisfaisants car ils ne présentent pas une résistance à l'eau à coeur.

Enfin, l'utilisation d'hydrofugeants déterminés, les alkyls- aryl- alcoxy- polysiloxanes, a été proposée dans la demande de brevet FR 2.241.153, pour l'imprégnation de matériaux inorganiques ainsi que de papier et de charbon, en particulier lors de leur briquetage ou de la fabrication de briques.

Par conséquent, aucun des procédés existants ne permet d'obtenir, dans des conditions économiquement et écologiquement acceptables, des agglomérés combustibles présentant simultanément des caractéristiques mécaniques et une tenue à l'eau satisfaisantes.

L'invention a donc pour but de remédier aux inconvénients de l'art antérieur et de fournir un aggloméré combustible répondant mieux que ceux qui existent déjà aux diverses exigences de la pratique.

Et la Société Demanderesse a eu le mérite de trouver que ce but était atteint dès lors que les agglomérés combustibles du genre en question comportent, répartis au sein de leur masse constitutive,

— d'une part un liant organique choisi dans le groupe comprenant les amidons, les dérivés d'amidon, les farines, les protéines, les celluloses, les hémicelluloses et les mélanges de ces produits et,
— d'autre part, un agent hydrofugeant organosilicique.

En conséquence, l'aggloméré combustible résistant à l'eau à base d'un matériau combustible finement divisé conforme à l'invention est caractérisé par le fait qu'il comporte, réparties au sein de sa masse constitutive, des proportions efficaces respectivement d'au moins un liant organique choisi dans le groupe comprenant les amidons, les dérivés d'amidon, les farines, les protéines, les celluloses, les hémicelluloses ainsi que les mélanges de ces produits et d'au moins un agent hydrofugeant organosilicique.

On désigne par proportion efficace celle suffisante pour obtenir l'effet recherché.

Selon un mode de réalisation avantageux de l'aggloméré conforme à l'invention, le liant organique est un amidon ou un dérivé d'amidon.

Selon un autre mode de réalisation avantageux de l'aggloméré conforme à l'invention, l'agent hydrofugeant organosilicique est un composé dont l'unité structurale est représentée par la formule :

$$-\overset{\displaystyle R}{\underset{\displaystyle R_1}{Si}}-O- \qquad (I)$$

dans laquelle R et $R_1$, qui peuvent être identiques ou différents l'un de l'autre, sont de l'hydrogène ou des radicaux organiques choisis dans le groupe comprenant les radicaux méthyle, alcoyle, fluoroalcoyle, phényle éventuellement substitué, vinyle ou leurs dérivés chlorés, alcoxy, acyloxy, alcoylamino, ledit composé étant avantageusement choisi dans le groupe comprenant les huiles silicones non réactives, les résines silicones, les huiles silicones réactives notamment hydroxylées, alcoylées, arylées, hydroalcoylées, hydroarylées ainsi que les mélanges de ces produits et les émulsions qui peuvent être préparées à partir de ces produits.

Selon un autre mode de réalisation avantageux de l'aggloméré conforme à l'invention, l'agent hydrofugeant organosilicique est choisi dans le groupe des siliconates de formule générale :

$$\left[\overset{\displaystyle R_2}{\underset{\displaystyle OX}{Si}}\right]_n O- \qquad (II)$$

dans laquelle

— $R_2$ est un groupement alcoyle ($C_1$-$C_{10}$), alkényle ($C_1$-$C_{10}$) ou aryle ($C_1$-$C_{10}$),

— X est un atome de métal alcalin ou alcalino-terreux et

— $1 \leq n \leq 10$

le siliconate de potassium étant préféré.

Lorsque le liant organique entrant dans la constitution de l'aggloméré conforme à l'invention est un amidon ou un dérivé d'amidon, on désigne par ces termes,

— en ce qui concerne l'amidon, les amidons natifs de toute origine, naturels ou hybrides provenant par exemple de la pomme de terre, du manioc, du maïs, du maïs cireux, du maïs à haute teneur en amylose, du blé et des coupes qui peuvent en être faites, de l'orge et du sorgho,

— en ce qui concerne le dérivé d'amidon, les amidons modifiés par voie physique et/ou chimique.

Avantageusement, le liant organique est un amidon natif éventuellement rendu soluble dans l'eau froide par un traitement physique de cuisson-extrusion et/ou de gélatinisation sur tambour.

Par rapport au poids de matériaux combustibles finement divisés, l'aggloméré conforme à l'invention comprend avantageusement :

— une proportion de 0,2 à 25% en poids de liant organique, de préférence de 1 à 15% en poids et, plus préférentiellement encore, de 2 à 7% en poids,

— une proportion de 0,005 à 5% en poids d'agent hydrofugeant organosilicique, de préférence de 0,025 à 1,5% en poids et, plus préférentiellement encore, de 0,05 à 0,5% en poids.

L'aggloméré conforme à l'invention peut éventuellement comprendre d'autres constituants comme par exemple les carbonates, la chaux vive ou éteinte, la dolomite, les silicates alcalins, les argiles, les latex, le borax, les polyphosphates, les phosphates, le lait et/ou le lactosérum concentrés, le ciment, les alcools polyvinyliques et les résines thermodurcissables. La proportion de ces constituants peut atteindre 15% en poids par rapport au poids de matériau finement divisé ; la répartition granulométrique de ces constituants doit être de préférence proche de celle du matériau finement divisé.

Et la granulométrie de ce matériau combustible finement divisé qui représente le constituant essentiel en proportion pondérale de l'aggloméré conforme à l'invention, est généralement comprise entre environ 1 µm et environ 1 cm.

Le procédé conforme à l'invention pour préparer l'aggloméré conforme à l'invention est caractérisé par le fait :

— que l'on sélectionne un matériau combustible finement divisé, un liant organique du groupe défini plus haut et un agent hydrofugeant organosilicique,

— que l'on mélange l'agent hydrofugeant avec soit le matériau combustible, soit le liant organique, soit avec l'un et l'autre de ces produits ou leur mélange,

— que l'on soumet le mélange ainsi obtenu à un traitement d'agglomération.

Suivant un mode de réalisation avantageux du procédé conforme à l'invention, seule une partie de l'agent

hydrofugeant est mélangée avec soit le matériau combustible, soit le liant organique, soit avec l'un et l'autre de ces produits ou leur mélange, l'autre partie de l'agent hydrofugeant étant appliquée sur le produit résultant du traitement d'agglomération.

Selon un autre mode de réalisation avantageux du susdit procédé, on prépare une composition de matière comprenant le liant organique et au moins une partie de l'agent hydrofugeant organosilicique, on réalise un mélange intime du combustible finement divisé et de cette composition de matière et on soumet ce mélange au traitement d'agglomération, la partie éventuelle d'agent hydrofugeant non comprise par la composition de matière étant par exemple appliquée au produit résultant du traitement d'agglomération.

La composition de matière mise en oeuvre dans ce mode de réalisation avantageux du procédé conforme à l'invention constitue, dans le cadre de cette application particulière, un produit industriel nouveau.

Selon un autre mode de réalisation du procédé conforme à l'invention, on soumet l'aggloméré obtenu à l'issue du traitement d'agglomération à un traitement d'étuvage dans des conditions de température généralement comprises entre environ 80-100°C et environ 200°C.

Suivant un autre mode de réalisation avantageux du procédé conforme à l'invention, la nature et les proportions des constituants sont sélectionnées de façon telle que l'aggloméré obtenu présente les caractéristiques indiquées plus haut.

Par ailleurs, la technique d'agglomération mise en oeuvre dans le susdit procédé est choisie dans le groupe comprenant la pelletisation, la pression-compactage, l'extrusion et le moulage ; ces techniques sont en elles-mêmes connues et décrites par exemple dans le brevet EP 0.097.486.

Pour augmenter la résistance à l'abrasion des agglomérés en vue de limiter la production de fines lors des manutentions, on peut déposer à leur surface un feuil ou pellicule de protection.

Pour constituer ladite pellicule de protection, on peut avoir recours à l'un des produits du groupe comprenant les dérivés acryliques, l'alcool polyvinylique, les silicates alcalins, les sels de phosphate, les dérivés cellulosiques, les résines styrène-butadiène et les liqueurs sulfitiques ; mais on préfère utiliser des amylacés et, en particulier, des amidons natifs ou modifiés et, plus particulièrement encore, des amidons hydrolysés ou oxydés ; avantageusement, ces amylacés pourront être rendus résistants à l'eau par exemple, comme connu, à l'aide de résines de type urée-formol, phénol-formol, mélamine-formol, cétone-formol et leurs mélanges.

Lorsqu'une partie au moins de l'agent hydrofugeant est appliquée après réalisation du traitement d'agglomération, on peut incorporer ledit agent hydrofugeant aux solutions de traitement décrites plus haut ou procéder directement à son application par trempage, aspersion ou pulvérisation.

L'aggloméré combustible conforme à l'invention présente, outre un ensemble de caractéristiques mécaniques élevées, tout ou moins égales à celles des agglomérés conformes à l'art antérieur, une tenue à l'eau remarquable.

L'invention pourra être encore mieux comprise à l'aide des exemples qui suivent et qui sont relatifs à des modes de réalisation avantageux.

## EXEMPLE 1

Boulets à base de fines de charbon.

Dans un malaxeur, on introduit, d'une part, 50 kg de fines de charbon ayant une humidité superficielle de 2,2%, une granulométrie inférieure à 1 mm et, d'autre part, 3 kg d'amidon natif de blé. On chauffe ce mélange jusqu'à 50°C et on y introduit alors 4,5 litres d'eau. On malaxe le mélange ainsi obtenu pendant une demi-heure sous chauffage en élevant la température à 90°C ; l'humidité superficielle mesurée à l'aide du dispositif connu sous la désignation SPEEDY est alors de 2,3%. Le mélange est aggloméré par pression-compactage sur une presse du type SAHUT CONREUR ; parmi les paramètres du traitement, on fournit la température du mélange qui, au moment de l'agglomération, est d'environ 70°C, la pression de réglage qui est de 16,7 $10^5$ N/m linéaire, la vitesse des zones de la presse qui est de 5 tr/min et la puissance de la presse qui est de 6 kW.

On obtient ainsi des boulets de charbon présentant une cohésion suffisante à vert pour pouvoir subir un transport. Ils ne sont pas endommagés par une chute d'une hauteur de 6 mètres et ont une bonne résistance mécanique après 1 heure de séchage à température ambiante.

La résistance de ces boulets, déterminée à l'aide d'un compressiomètre à contrepoids mis au point par la Société SAHUT CONREUR présente les valeurs suivantes :

- à vert ...... 294,3 N
- après 24 heures de séchage à température ambiante ...... 686,7 N
- après étuvage d'une heure à 100°C et d'une heure à 130°C ...... 1765,8 N.

Ces boulets sont ensuite immergés dans de l'eau froide. On constate qu'ils se désagrègent très rapidement. Après quelques minutes, l'aggloméré ne présente plus aucune cohésion.

Ces résultats illustrent qu'il est possible, en utilisant uniquement un liant de type amylacé, de produire des agglomérés de fines de charbon ayant de bonnes caractéristiques mécaniques mais ne résistant pas à l'eau.

EXEMPLE 2

Boulets de fines de charbon.

Dans un malaxeur, on mélange intimement 50 kg de fines de charbon de caractéristiques identiques à celles des fines de l'exemple 1 et 3 kg d'amidon natif de blé. On chauffe le mélange obtenu sous agitation jusqu'à une température de 50°C. On ajoute alors 50 grammes d'agent hydrofugeant de type RHODORSIL SILICONATE 51 T (siliconate de potassium commercialisé par RHONE-POULENC à environ 49% de matière sèche) dilué dans 5 litres d'eau. On malaxe ensuite ce mélange pendant une demi-heure en portant la température du mélange à 90°C ; l'humidité superficielle est alors de 2,1%. Le mélange est ensuite soumis à un traitement d'agglomération par pression-compactage dans les mêmes conditions qu'à l'exemple 1.

On obtient ainsi des boulets de fines de charbon présentant une cohésion suffisante à vert pour pouvoir subir un transport. Après une chute d'une hauteur de 6 mètres, ils ne sont pas endommagés ; ils ont une bonne résistance mécanique après 1 heure de séchage à température ambiante.

La résistance de ces boulets, mesurée comme à l'exemple 1, présente les valeurs suivantes :

- à vert ...... 294,3 N
- après 24 heures de séchage à température ambiante ...... 784,8 N
- après étuvage d'une heure à 100°C et d'une heure à 130°C ...... 1962,0 N.

Ces boulets sont ensuite immergés dans de l'eau froide. Il n'est pas observé de désagrégation même après plusieurs mois d'immersion.

La résistance mécanique des boulets reste inchangée après leur séjour dans l'eau et après un simple égouttage. L'intérieur des boulets ne présente aucune trace d'humidité.

Cet exemple montre que l'addition de 5,6% d'amidon natif et de 0,047% de siliconate de potassium en poids sec par rapport au poids de fines de combustible, permet d'obtenir des agglomérés satisfaisant aux exigences de la technique du point de vue de la résistance mécanique et de la tenue à l'eau.

EXEMPLE 3

Boulets de fines de charbon.

On ajoute à un mélange de fines de charbon et d'amidon identique à celui de l'exemple 2 et cela dans les mêmes conditions, 100 g d'une émulsion de silicone RHODORSIL EMULSION 879 commercialisé par RHONE-POULENC et on soumet le mélange aux mêmes traitements que le mélange de l'exemple 2. L'humidité superficielle est alors de 1,5%.

On obtient ainsi des boulets de fines de charbon présentant une cohésion à vert suffisante pour subir un transport. Après une chute d'une hauteur de 6 mètres, ils ne sont pas endommagés ; ils ont une bonne résistance mécanique après 1 heure de séchage à température ambiante.

La résistance de ces boulets, mesurée comme à l'exemple 1, présente les valeurs suivantes :

- à vert ...... 294,3 N
- après 24 heures de séchage à température ambiante ...... 657,3 N
- après étuvage d'une heure à 100°C et d'une heure à 130°C ...... 1863,9 N.

Ces boulets sont ensuite immergés dans de l'eau froide. Il n'est pas observé de désagrégation même après plusieurs mois d'immersion.

Leur résistance mécanique reste inchangée après leur séjour dans l'eau et après un simple égouttage. L'intérieur des boulets ne présente aucune trace d'humidité.

Cet exemple montre que l'addition de 5,6% d'amidon natif et de 0,11% d'un dérivé organosilicique de type émulsion d'huiles de silicone réactives en poids sec par rapport au poids de fines de combustible permet d'obtenir des agglomérés satisfaisant aux exigences de la technique tant au point de vue de la résistance mécanique que de la tenue à l'eau.

## Revendications

1. Aggloméré combustible résistant à l'eau à base d'un matériau combustible finement divisé, caractérisé par le fait qu'il comporte, réparties au sein de sa masse constitutive, des proportions efficaces respectivement
— d'au moins un liant organique choisi dans le groupe comprenant les amidons natifs de toute origine, naturels ou hybrides provenant par exemple de la pomme de terre, du manioc, du maïs, du maïs cireux, du maïs à haute teneur en amylose, du blé et des coupes qui peuvent en être faites, de l'orge et du sorgho, les dérivés d'amidon constitués par des amidons modifiés par voie physique et/ou chimique, les farines, les protéines, les celluloses, les hémicelluloses et les mélanges de ces produits, et
— d'au moins un agent hydrofugeant organosilicique.

2. Aggloméré selon la revendication 1, caractérisé par le fait que l'agent hydrofugeant organosilicique est un composé dont l'unité structurale est représentée par la formule

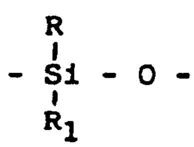

(I)

dans laquelle R et $R_1$, qui peuvent être identiques ou différents l'un de l'autre, sont de l'hydrogène ou des radicaux organiques choisis dans le groupe comprenant les radicaux méthyle, alcoyle, fluoroalcoyle, phényle éventuellement substitué, vinyle ou leurs dérivés chlorés, alcoxy, acyloxy, alcoylamino, ledit composé étant de préférence choisi dans le groupe comprenant les huiles silicones non réactives, les résines silicones, les huiles silicones réactives notamment hydroxylées, alcoylées, arylées, hydroalcoylées, hydroarylées ainsi que les mélanges de ces produits et les émulsions qui peuvent être préparées à partir de ces produits.

3. Aggloméré selon la revendication 2, caractérisé par le fait que l'agent hydrofugeant organosilicique est choisi dans le groupe des siliconates de formule générale :

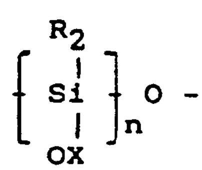

(II)

dans laquelle
— $R_2$ est un groupement alcoyle ($C_1$-$C_{10}$), alkényle ($C_1$-$C_{10}$) ou aryle ($C_1$-$C_{10}$),
— X est un atome de métal alcalin ou alcalino-terreux et

— 1 ≤ n ≤ 10,
le siliconate de potassium étant préféré.

4. Aggloméré selon la revendication 1, caractérisé par le fait que le liant organique est un amidon natif éventuellement rendu soluble dans l'eau froide par un traitement physique de cuisson-extrusion et/ou de gélatinisation sur tambour.

5. Aggloméré selon l'une des revendications 1 à 4, caractérisé par le fait que, par rapport au poids de matériau combustible finement divisé, il comprend :

— une proportion de 0,2 à 25% en poids de liant organique, de préférence de 1 à 15% en poids et, plus préférentiellement encore, de 2 à 7% en poids,

— une proportion de 0,005 à 5% en poids d'agent hydrofugeant organosilicique, de préférence de 0,025 à 1,5% en poids et, plus préférentiellement encore, de 0,05 à 0,5% en poids.

6. Procédé pour la préparation d'un aggloméré combustible résistant à l'eau selon l'une des revendications 1 à 5, caractérisé par la fait

— que l'on sélectionne un matériau combustible finement divisé, un liant organique et un agent hydrofugeant organosilicique,

— que l'on mélange l'agent hydrofugeant avec soit le matériau combustible, soit le liant organique, soit avec l'un et l'autre de ces produits ou leur mélange,

— que l'on soumet le mélange ainsi obtenu à un traitement d'agglomération.

7. Procédé selon la revendication 6, caractérisé par le fait que seule une partie de l'agent hydrofugeant est mélangée avec soit le matériau combustible, soit le liant organique, soit avec l'un et l'autre de ces produits ou leur mélange, l'autre partie de l'agent hydrofugeant étant appliquée sur le produit résultant du traitement d'agglomération.

8. Procédé selon l'une des revendications 6 et 7, caractérisé par le fait qu'on prépare une composition de matière comprenant le liant organique et au moins une partie de l'agent hydrofugeant organosilicique, on réalise un mélange intime du combustible finement divisé et de cette composition de matière et on soumet ce mélange au traitement d'agglomération, la partie éventuelle d'agent hydrofugeant non comprise par la composition de matière étant appliquée au produit résultant du traitement d'agglomération.

9. Procédé selon l'une des revendications 6 à 8, caractérisé par le fait qu'on soumet l'aggloméré obtenu à l'issue du traitement d'agglomération à un traitement d'étuvage dans des conditions de température généralement comprises entre environ 80-100°C et environ 200°C.

10. Procédé selon l'une des revendications 6 à 9, caractérisé par le fait que la technique d'agglomération mise en oeuvre est choisie dans le groupe comportant la pelletisation, la pression-compactage, l'extrusion et le moulage.

11. Procédé selon l'une des revendications 6 à 10, caractérisé par le fait que, lorsqu'au moins une partie de l'agent hydrofugeant est appliqué après réalisation du traitement d'agglomération, on procède par trempage, aspersion ou pulvérisation.

**Patentansprüche**

1. Wasserbeständiges, brennbares Agglomerat auf Basis eines feinteiligen, brennbaren Materials, dadurch gekennzeichnet, daß es, im Inneren seiner Masse verteilt, jeweils wirksame Anteile enthält von

— zumindest einem organischen Bindemittel, ausgewählt unter den unmodifizierten Stärken jeglicher Herkunft, den natürlichen Stärken, oder den Hybridstärken, beispielsweise der Kartoffelstärke, der Maniokstärke, der Maisstärke, der wachsigen Maisstärke, der Maisstärke mit hohem Amylosegehalt, der Weizenstärke und der Fraktionen, die ausgehend von diesen Stärken erhalten werden können, der Gerstestärke, sowie der Sorghumstärke und unter den Stärkederivaten bestehend aus physikalisch und/oder chemisch modifizierten Stärken, den Mehlen, den Proteinen, den Cellulosen, den Hemicellulosen und Gemischen dieser Produkte, und

— zumindest einem wasserabweisenden Mittel auf Organosilicium-Basis.

2. Agglomerat gemäß Anspruch 1, dadurch gekennzeichnet, daß das wasserabweisende Mittel auf Organosilicium-Basis eine Verbindung ist, deren Struktureinheit durch die Formel

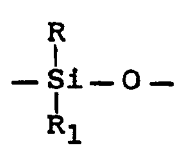

(I)

wiedergegeben wird, worin R und $R_1$, die gleich oder voneinander verschieden sein können, Wasserstoff oder organische Reste, ausgewählt unter Methyl-, Alkyl-, Fluoralkyl-, gegebenenfalls substituierten Phenyl-, Vinyl- oder deren chlorierten Derivaten, Alkoxy-, Acyloxy- und Alkylaminoresten, bedeuten, wobei diese Verbindung vorzugsweise ausgewählt wird aus der Gruppe der nicht-reaktiven Siliconöle, der Siliconharze, der reaktiven Siliconöle, die insbesondere hydroxyliert, alkyliert, aryliert, hydroalkyliert oder hydroaryliert sind, sowie der Gemische dieser Produkte und der Emulsionen, die aus diesen Produkten hergestellt werden können.

3. Agglomerat gemäß Anspruch 2, dadurch gekennzeichnet, daß das wasserabweisende Mittel auf Organosilicium-Basis aus der Gruppe der Siliconate der allgemeinen Formel

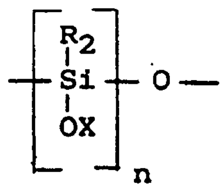

(II)

ausgewählt wird, worin

— $R_2$ eine $C_1$-$C_{10}$-Alkyl-, $C_1$-$C_{10}$-Alkenyl- oder eine $C_1$-$C_{10}$-Arylgruppe bedeutet,
— X für ein Alkalimetall- oder Erdalkalimetallatom steht und
— $1 \leq n \leq 10$,

wobei Kaliumsiliconat bevorzugt wird.

4. Agglomerat gemäß Anspruch 1, dadurch gekennzeichnet, daß das organische Bindemittel eine gegebenenfalls durch physikalische Extrudierkochung und/oder Gelatinisierungsbehandlung auf einem Walzentrockner in kaltem Wasser löslich gemachte, native Stärke ist.

5. Agglomerat gemäß einem der Ansprüche 1 bis 4, dadurch gekennzeichnet, daß sie, bezogen auf das Gewicht des feinteiligen, brennbaren Materials, enthält:

— einen Anteil von 0,2 bis 25 Gew.%, vorzugsweise 1 bis 15 Gew.% und insbesondere 2 bis 7 Gew.% an organischem Bindemittel und
— einen Anteil von 0,005 bis 5 Gew.%, vorzugsweise 0,025 bis 1,5 Gew.% und insbesondere 0,05 bis 0,5 Gew.% an wasserabweisendem Mittel auf OrganosiliciumBasis.

6. Verfahren zur Herstellung eines wasserbeständigen, brennbaren Agglomerats gemäß einem der Ansprüche 1 bis 5, dadurch gekennzeichnet, daß

— man ein feinteiliges, brennbares Material, ein organisches Bindemittel und ein wasserabweisendes Mittel auf Organosilicium-Basis auswählt,
— man das wasserabweisende Mittel entweder mit dem brennbaren Material oder mit dem organischen Bindemittel oder dem einen oder anderen dieser Produkte oder deren Gemisch mischt und
— man das so erhaltene Gemisch einer Agglomerierungsbehandlung unterzieht.

7. Verfahren gemäß Anspruch 6, dadurch gekennzeichnet, daß lediglich ein Teil des wasserabweisenden Mittels entweder mit dem brennbaren Material oder mit dem organischen Bindemittel oder mit dem einen oder anderen dieser Produkte oder deren Gemisch gemischt wird, wobei der andere Teil des wasserabweisenden Mittels auf das sich durch die Agglomerierungsbehandlung ergebende Produkt aufgebracht wird.

8. Verfahren gemäß einem der Ansprüche 6 und 7, dadurch gekennzeichnet, daß man eine Materialzusammensetzung herstellt, die das organische Bindemittel und zumindest einen Teil des wasserabweisenden Mittels auf Organosilicium-Basis enthält, man eine innige Mischung des feinteiligen, brennbaren Materials und dieser Materialzusammensetzung vornimmt und diese Mischung einer Agglomerierungsbehandlung unterzieht, wobei der etwaige von der Materialzusammensetzung nicht umfaßte Anteil des wasserabweisenden Mittels auf das der Agglomerierungsbehandlung entstammende Produkt aufgebracht wird.

9. Verfahren gemäß einem der Ansprüche 6 bis 8, dadurch gekennzeichnet, daß man das nach der Agglomerierungsbehandlung erhaltene Agglomerat einer Wärmebehandlung unter Temperaturbedingungen von im allgemeinen zwischen 80 bis 100°C und etwa 200°C unterzieht.

10. Verfahren gemäß einem der Ansprüche 6 bis 9, dadurch gekennzeichnet, daß die angewandte Agglomerierungstechnik unter der Pelletisierung, der Druckverdichtung, der Extrusion und der Formung ausgewählt wird.

11. Verfahren gemäß einem der Ansprüche 6 bis 10, dadurch gekennzeichnet, daß man, wenn zumindest ein Teil des wasserabweisenden Mittels nach der Durchführung der Agglomerierungsbehandlung aufgebracht wird, ein Anfeuchten, Besprengen oder Zerstäuben bzw. Pulverisieren vornimmt.

## Claims

1. Water-resistant fuel agglomerate based on a finely divided fuel material, characterized by the fact that it comprises, distributed within its constituent mass, effective proportions respectively

— of at least one organic binder selected from the group comprising native starches of any origin, natural or hybrid, for example from potato, from manioc, from corn, from waxy corn, from corn with a high amylose content, from wheat and from fractions therefrom, from barley and sorghum, starch derivatives constituted by physically and/or chemically modified starches, flours, proteins, celluloses, hemicelluloses and mixtures of these substances, and

— of at least one organosilicic water-repelling agent.

2. Agglomerate according to claim 1, characterized by the fact that the organosilicic waterproofing agent is a compound whose structural unit is represented by the formula :

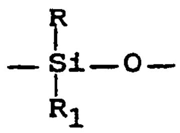

(I)

in which R and $R_1$, which may be identical or different from one another, are hydrogen or organic radicals selected from the group comprising methyl, alkyl, fluoroalkyl, phenyl possibly substituted, vinyl or their chlorinated derivatives, alcoxy, acyloxy and alkylamino radicals, said compounds being advantageous selected from the group comprising non-reactive silicone oils, silicone resins, reactive silicone oils, especially hydroxylated, alkylated, arylated, hydroalkylated, or hydroarylated as well as mixtures of these substances and the emulsions which can be prepared from these substances.

3. Agglomerate according to claim 2, characterized by the fact that the organosilicic water-repelling agent is selected from the group of siliconates of the general formula :

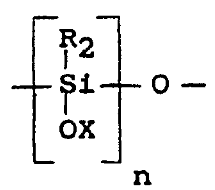

(II)

in which

$R_2$ is an alkyl ($C_1$-$C_{10}$), alkenyl ($C_1$-$C_{10}$) or aryl ($C_1$-$C_{10}$) group,

X is an atom of alkali or alkaline-earth metal and

$l \leq n \leq 10$, potassium siliconate being preferred.

4. Agglomerate according to claim 1, characterized by the fact that the organic binder is a native starch possibly rendered soluble in cold water by a physical treatment of cooking-extrusion and/or gelatinization on a drum.

5. Agglomerate according to anyone of claims 1 to 4, characterized by the fact that, with respect to the weight of finely divided fuel material, it comprises :

proportion of 0.2 to 25% by weight of organic binder, preferably from 1 to 15% by weight and, more preferably still, from 2 to 7% by weight,

a proportion of 0.005 to 5% by weight of organosilicic waterproofing agent, preferably from 0.025 to 1.5% by weight and, more preferably still, from 0.05 to 0.5% by weight.

6. Process for the preparation of a water-resistant fuel agglomerate according to anyone of claims 1 to 5, characterized by the fact

— that there is selected a finely divided fuel material, an organic binder and an organosilicic waterrepelling agent,

— that the water-repelling agent is mixed with either the fuel material, or the organic binder, or with one and other of these substances or their mixture,

— that the mixture so obtained is subjected to an agglomeration treatment.

7. Process according to claim 6, characterized by the fact that only a part of the waterproofing agent is mixed with either the fuel material, or the organic binder, or with one and other of these substances or their mixture, the other part of the waterproofing agent being applied to the product resulting from the agglomeration

treatment.

8. Process according to anyone of claims 6 and 7, characterized by the fact that a composition of matter is prepared comprising the organic binder and at least a part of the organosilicic waterproofing agent, an intimate mixture is formed of the finely divided fuel and of this composition of matter and this mixture is subjected to an agglomeration treatment, the possible proportion of waterproofing agent not comprised by the composition of matter being applied to the product resulting from the agglomeration treatment.

9. Process according to anyone of claims 6 to 8, characterized by the fact that the agglomerate obtained at the end of the agglomeration treatment is subjected to a stoving treatment under temperature conditions generally comprised between about 80°-100°C and about 200°C.

10. Process according to anyone of claims 6 to 9, characterized by the fact that the agglomeration technique employed is selected from the group comprising pelletization, pressing-compacting, extrusion and molding.

11. Process according to anyone of claims 6 to 10, characterized by the fact that, when at least part of the waterproofing agent is applied after carrying out the agglomeration treatment, the procedure is by dipping, by sprinkling or by spraying.